Europäisches Patentamt

European Patent Office

Office européen des brevets

(19)

(11) Publication number: **0 394 756**

**A1**

(12) # EUROPEAN PATENT APPLICATION

(21) Application number: **90106935.1**

(51) Int. Cl.⁵: **B09B 3/00**

(22) Date of filing: **11.04.90**

A request for correction of the description has been filed pursuant to Rule 88 EPC. A decision on the request will be taken during the proceedings before the Examining Division (Guidelines for Examination in the EPO, A-V, 2.2).

(30) Priority: **25.04.89 HU 197389**

(43) Date of publication of application:
**31.10.90 Bulletin 90/44**

(84) Designated Contracting States:
**AT BE CH DE DK ES FR GB GR IT LI LU NL SE**

(71) Applicant: **ENERGIAGAZDALKODASI INTEZET**
**33-34, Bem-rakpart**
**H-1027 Budapest II(HU)**

(72) Inventor: **Dobozi, György, cert.mech.eng.**
**Ördögorom Lejtö 12b**
**H-1112 Budapest(HU)**
Inventor: **Falusi, Tamas, cert.mech.eng.**
**Garas u. 26/a**
**H-1026 Budapest(HU)**
Inventor: **Ignacz, Csaba, cert.mech.eng.**
**Bethlen G. u. 14**
**H-2011 Budakalasz(HU)**
Inventor: **Pongracz, Daniel, cert.mech.eng.**
**Felsözöldmali u. 88/b**
**H-1125 Budapest(HU)**
Inventor: **Szivak, Attila, cert. eng.**
**Rözse u. 6-8**
**H-1125 Budapest(HU)**
Inventor: **Vamos, György, cert. mech. eng.**
**Matyas k. 38/b**
**H-1125 Budapest(HU)**
Inventor: **Moor, Tibor**
**Lotz Karoly 12 a**
**H-1026 Budapest(HU)**

(74) Representative: **Patentanwälte Viering & Jentschura**
**Steinsdorfstrasse 6**
**D-8000 München 22(DE)**

(54) **Method for collection, transport and deposition of slag and flyash from coalfired power stations.**

(57) Method for collection, transport and deposition of slag and flyash from coal-fired power stations. In the course of the method for the water-saving ecologic collection, delivery and deposition of slag and flyash from thermal power plants fired with pulverized coal, simultaneously utilizing physical and chemical properties, slag is allowed to fall into the cooling water basin (5) from the furnace chamber (1), the slag is forwarded partly by scraper-conveyor (4), partly through the overflow (8) to the condenser (9) and coarse flyash is flushed through the pipeline (31) from the washer (30) into the condenser (9); fine flyash having been precipitated electrostatically or in filter bags is forwarded from below the separator (3) to the mixer bin (16), wherein slag and coarse flyash carried by the water-flow and airborne fine flyash are mixed. Major part of the mixture of slag-flyash-water is recycled to the mixer bin (16) and by the aid of the streams in the mixing pipeline (17) a homogeneous mixture is produced which is led to the deposit. Collection of the slag formed in the furnace chamber and the coarse flyash having been separated mechanically in the condenser (9) are allowed to circulate in a system of given volume with a water quantity defined by the duration needed for the maximal dissolution of the CaO content in the slag and the coarse flyash. Slag and/or coarse flyash is pumped from the condenser (9) through the pipeline (34) with a water quantity less than the weight of the fine flyash intended to be admixed, while mixing is carried out so that in the pipe-line (34) with a considerable turbulence larger grains in the slag and the coarse flyash are comminuted by impacted flow and so that in the mixing space (15) from the slag, the coarse flyash and the fine flyash a mixture with grains with the grain size of 0,1-0,3 mm to about 80% is produced. As a final cover of the deposit homogeneous slag-flyash layers are arranged, which dispose of the coefficient of water permeability defined by the requirements related to ecology, while in the intermediate layers waterproofness is different.

Fig.1

## Method for collection, transport and deposition of slag and flyash from coal-fired power stations

The invention relates to a method for the water-saving ecologic collection, transport and deposition of slag and flyash from coal-fired thermal power stations with the simultaneous utilization of physical and chemical properties. In course of the method according to the invention, when collecting slag and flyash we establish the conditions for utilizing chemical agents contained in slag and flyash being soluble in water, as well as physical characteristics of grains of slag and flyash could be well utilized within the transport system of pipelines, while a further requirements lies in that on the place of deposition of slag and flyash prescriptions relating to ecology could be satisfied.

It is a well known fact that in thermal power stations fired with pulverized coal a residue of combustion - slag and flyash - occuring in a solid granular state results from the incombustible part of the pulverized coal having been blown into the boilers. Slag falling out directly from the furnace chamber has a grain size of 0 to 20,0 mm, while flyash is flowing together with fluegases and represents a residue of combustion of the grain size of 0,0-0,50 mm, as precipitated from flue gases. Slag and flyash contain mineral components being characteristic for the barren naterial of the coal used and versions may occur which arise in the oxidizing atmosphere upon the thermal effect in the furnace chamber.

Most frequently occuring minerals in coal barren:

Clay Minerals:

Caolinite $Al_2(OH)_4 Si_2 O_5$

Halloinite $Al_2(OH)_n Si_2 O_5\ 2(H_2 O)$

Montmorillonite $Al_2(OH)_4 Si_4 O_{10}\ H_2 O$

Carbonate minerals:

Limestone $CaCO_3$

Siderite $FeCO_3$

Magnesite $MgCO_3$

Dolomite $CaMg(CO_3)_2$

Ankerite $FeMgMn(CaCO_3)_2$

Sulfide ores:

Pyrite $Fe_2 S_2$

Melnikovite $FeS_2(H_2 O)$

Marcasite $FeS_2$

Lead Sulfide $PbS$

Copper quartz $CuFe_2 S_2$

Zinc sulfide $ZnS$

Quartz $SiO_2$

Salts:

Common salt $NaCl$

Sylvite $KlCl$

Gyprum $CaSO_4\ 2(H_2 O)$

In the furnace chamber of boilers clay minerals release absorbed water ($H_2 O$) in form of steam, while iron sulfide ores release sulphur (S) in form of a gas. Contained metals (Al, Fe, Cu, etc.), quartz ($SiO_2$), salts (Na, K) melt in the furnace chamber and while being cooled, tiny granular porous hollow melt spheres with gaseous inclusions are formed in the flow of flue gas, while from quartz vitreous spheres with gaseous inclusions are formed. From these polygonal needle-shaped flyash-grains with sharp edges and confined by tiny plates are formed. Larger grains being still in glowing state, falling out from the furnace chamber of the boiler are falling into the cooling water below the boiler, wherein -as a consequence of quick cooling - porous slag-grains with closed air-inclusions are formed having been shaped by steam. This latter phenomenon can be demonstrated by testing density of slag-grains, according to which density of slag grains having been formed from the same mineral depends on the size of the grain. For the sake of information we present the density of slag grains which fell out simultaneously from the furnace chamber of one of the power stations. In respect to order of magnitude these series of data characterize the density of slag coming from whichever of power stations fired with pulverized coal.

| Sieve analysis | Density of slag |
|---|---|
| mm | g/cm3 |
| >10 | 1.014 |
| 10-6 | 1.053 |
| 6-3 | 1.150 |
| 3-1 | 1.629 |
| 1-0,5 | 1.647 |
| 0,05-0,25 | 1.824 |
| 0,25-0,1 | 2,012 |
| 0,1-0,063 | 2,120 |
| below 0,063 | 2,176 |

From these data it becomes obvious that as well as flyash, as in the slag lover density of larger grains is caused mainly by the closed air-inclusions within the grains and by the high-grade porosity, accordingly, one of the characteristic physical feature of these grains lies in that they are not compact, at the same time they are brittle and got comminuted easily.

Carbonate minerals release carbon dioxide ($CO_2$), iron oxides contained are also melting, at the same time Ca and Mg content - in the bond CaO and MgO - appear in a solid state in fine grain structure both at the temperature of the furnace chamber and in a cooled state, mixed up with the grains of melts of metals, quartz and salts or adhering on their surface or getting independently into the state of slag and flyash, respectively.

Below we detail the characteristic mineral composition of slag and flyash:

| | |
|---|---|
| $SiO_2$ | 25-55% |
| $Fe_2O_3$ | 6-25% |
| $Al_2O$ | 5-55% |
| CAO | 1-50% |
| MgO | 3-15% |
| $SO_3$ | 3-25% |
| $P_2O_3$ | 0-0,5% |
| $TiO_3$ | 0,2-2,5% |
| $K_2O$ | 0,2-3% |
| $Na_2O$ | 0-16% |

Below you may find the grain distribution of slag and flyash arising in one of the power stations:

| Grain distribution of flyash: | |
|---|---|
| Grainsize | Proportion of mass |
| mm | % |
| 0,5 | 0,02 |
| 0,5-0,25 | 0,95 |
| 0,25-0,1 | 15,36 |
| 0,1-0,063 | 14,89 |
| 0,063-0,030 | 24.18 |
| below 0,03 | 44.60 |

| Grain distribution of slag: | |
| --- | --- |
| Grainsize | Proportion of mass |
| mm | % |
| 10 | 1,41 |
| 10-6 | 2,05 |
| 6-3 | 2,48 |
| 3-1 | 3,56 |
| 1-0,5 | 4,80 |
| 0,5-0,25 | 14,48 |
| 0,25-0,1 | 31.61 |
| 0,1-0,063 | 20.57 |
| 0,063-0,03 | 11.26 |
| below 0,03 | 7,78 |

Temperature of the slag grains falling out from the furnace chamber will be determined by the temperature of the water in the basin below the furnace chamber for cooling the slag, in practice temperature lies in the range between 30 and 60 ° C.

Temperature of the flyash grains having been precipitated in bulk from the flue gases equals approximately to the temperature of flue gas, that means that in practice flyash grains with a temperature of 80-140 ° C arrive into the collecting-bufferbins of the precipitators.

As a consequence of mineral composition, temperature, shape of grains and structural layout of grains and grain structure, composition of the state of collected slag and flyash, slags and flyashes show different physical and chemical properties.

Some of these properties used to be utilized in cement production, building industry, road construction, amelioration etc. Knowledgement of physical and chemical characteristics is imperative for delivering slag and flyash in masse mixed with water in pipelines and to deposit them in states of large surface and extension.

In accordance with earlier practice in thermal power stations slag formed in the furnace chamber is allowed to fall into the water bath below the boilers, where it is cooled and some larger, eventually melt sticking pieces are comminuted in breakers. Flyash with coarse grains having been precipitated mechanically from flue gases used to be flushed away with water flow. Flyash with finer grains having been precipitated by means of electrofilters or filterbags from flue gases is generally collected in a dry state in air flow for using it -in consideration of their resultant properties - in cement plants as fillers or in plants producing cellular concrete as additive etc.

According to general practice fine flyash in a dry state not having utilized yet is mixed with slag, coarse flyash and water and delivered in pipelines to final depository places. As a consequence of admixing of slag-flyash and water some physical characteristics and chemical composition of the single components will change. Water is cooling the grains and elutriates mineral salts contained therein. In dependence on the extent of eluate physical and chemical properties of the slag and flyash grains, so the state thereof will change. It goes without saying that mineral salts having been eluated from slags and flyash change composition of the forwarding water and certain characteristic thereof.

Our invention is directed to the slag and flyash quantities delivered through pipelines and to be deposited on large areas, not having been utilized yet, according to the processions of transport, collection and deposition of said materials. Knowledge of chemical-physical characteristic is imperative to be able to establish advantageous methods.

Methods are known, in the course of which slag and flyash used to be collected within the thermal power plant and mixed with water, thereafter the mixture thus obtained is delivered through a pipeline to the deposit, wherein the mixture is spread by means of surfacial stream and/or grains of slag are precipitated from the mixture. These methods are known as hydraulic collecting-transporting and depositing methods.

An earlier and most frequently used method lies in that equipments with a considerable water consumption are built and slag and flyash are collected, delivered and deposited in a considerably diluted state; in the course of this method slag and flyash are collected within the boiler and in consideration of technical aspects of collecting equipments, collection is realized with a considerable water flow in the proportion 1:2-1:20 weight-% (solid matter liquid). The highly diluted mixture thus obtained is delivered through a pressurized pipeline to the place of deposition, here solid and liquid phases are separated by precipitation with a large water surface. Slag and flyash - now in a solid state - are deposited here, while the liquid phase is led to a collecting basin from the place of deposition and in certain cases it may leak into the subsoil.

Hydraulic methods for collecting, delivering and depositing slag and flyash, in the course of which water quantity equals to the weight of solid material state, or it is even less, so content of solid matters will be large, are considered as relatively new methods. In course of this method water quantity added to slags and flyashes is not more than needed for hydraulic binding ability, i.e. hardening of the deposited material.

In this case a mixing method used to be applied, as a result of which the mixture of slag-flyash-water shows features, which are characteristic for heavy liquids. From the point of view of delivering through a pipeline it can be stated that physical characteristics of slag and flyash grains being in a bulk state, namely size and density, enable delivery in a pipeline, if mixed with water.

It is a well-known fact that when allowing a sludge to flow in a pipeline, which is diluted with a considerable water quantity, i.e. in a proportion of 1:2 and 1:10 weight-% (solid matter-liquid), it shows flow properties, which are characteristic for the flow of heterogenous mixtures.

In case the mixture is not flowing with the proper velocity the mixture will be decomposed to its original components as a consequence of the weight of larger grains, that means that liquid phase and solid matter are separated and solid grains precipitate in the pipeline. Accordingly, this type of mixture can be allowed to flow in a pipeline with a flow velocity only, with which the flow belongs exclusively to the so-called turbulent range. Extent of turbulence, the so-called "critical velocity" can be characterized by the magnitude which keeps even the largest grains in the sludge in motion. Therefore, the so-called "critical" velocity represents the lowest limit value of turbulent flow, in case of delivery of slag and flyash this value lies in the range between 1,5-1,6 m/sec. Below this limit value delivery of slag and flyash, respectively, stops, larger solid grains are not flowing anymore in the pipeline. That means that flow velocity of the mixture is to be kept above the critical velocity. In case, that content of solid matter becomes less, the missing quantity is to be replaced with water. For this reason there is no possibility to change the quantity of a mixture of constant density within a given pipeline within wide limits. As already mentioned, lowest limit value of the mixture to be delivered in the pipeline will be determined by the "critical velocity" belonging to the diameter of the pipeline and grain composition of slag and flyash.

It is is well known fact that in course of the mixing process for preparing sludges with water quantities being equal to the weight of the solid matter state or even less, i.e. 1:1 - 3:1 weight % solid matter liquid, special physical characteristics of fine flyash grains are utilized, as only with a state with such a grain distribution and grain composition - 0,0-0,50 mm -yields the possibility to obtain equal distribution with a small quantity of water in the state, by performing dynamic agitation, simultaneously to obtain a water layer of so-called molecular thickness on the surface of grains. As a consequence of dynamic mixing the mixture containing flyash and water becomes liquefied - with the characteristics of heavy liquids -so it can be pumped and allowed to flow in a pipeline

It is a well known physical phenomenon, that in course of delivering liquid substances in a pipeline, temperature of the liquid medium influences the so called "loss of pipe-friction" and accordingly economical parameters of the pipeline, as transporting means. Increased temperature reduces namely viscosity of liquid materials. Considerable change in viscosity appears mainly in liquids with higher viscosity (so crude oil, residual oil, etc.).

With means delivering slag and flyash using a considerable water quanity to slag and flyash of high temperature, temperature of the mixture having been prepared with multiple water quantity does not increase to such an extent, that one had to reckon with the effect of change in temperature, as viscosity approaches that of clean water.

It has been proposed to provide thinner pipelines - ∅ 100-200 mm - with heat insulation or to lay them into the soil to protect the line against freezing up, as it may happen that a mixture of 10 to 30° may freeze up on cold days and high velocity of wind, mainly in longdistance pipe-lines (10-20 km).

Propositions directed to ecology are also known, out of which we intend to describe technical solutions aming at the elimination of dust contaminations arriving to the air from the surface of slag-flyash depositions of large volume and extension resp. at the elimination of chemical contamination of soilwater and subsoil having been dissolved by waters leaking through the aggregate.

In order to be able to eliminate dust contamination, surface of the deposition has to be covered either with water or one has to establish surfaces free of dust. To prevent contamination of subsoil and waters in the subsoil - having mostly drinkwater quality - water storing spaces are to be insulated in a waterproof way and so, that protection should yield proper safety even after stopping operation of the deposit.

As for deposition, one of the most characteristic features of slags and flyashes appears in the so called "hydraulic binding ability" resulting from the carbonate containing mineral components and size of the grains, furtheron, resulting from the grain distribution of slag and flyash states and structure of the grains, with majority of deposits jointfactor characterizes density and "permeability to water" characterized watertightness. These are in a close connection with one another, determining interconnection between deponies of large extension and the atmosphere, environmental soil-layers, as well as flow of soilwater.

Hydraulic binding ability of the slag and flyash - in case of a low content of CaO and MgO - does not develop when admixed with a considerable quantity of water in the traditional way, as a consequence grains of slag and flyash do not stick to each other in the deposit, so air stream carries fine grains away from the dried surface of the deposit, that means that the surface of the deposit emits clouds of dust. At the same time, in course of precipitation from water grains of slag and flyash are separated according to grain size in compliance with topographic potentialities of the storing space; accordingly, in course of precipitation deposits will be built-up of aggregates or layers of different grain sizes; accordingly, the factor of permeability to water, i.e. $K = 10^{-2}$ to $10^{-3}$ cm/sec, will be different too; with this coefficient of permeability deposits communicate in a most diverse way with water-leading layers of the subsoil. Joint-coefficient, being characteristic for density of deposits is e = 0,9 to 4,0.

With systems operated with the mixture of slag-flyash and water, with considerable dilution, a part of the salts released from slag and flyash gets into the forwarding water, while dissolved salts contaminate soilwater flowing in the subsoil with undesired mineral components and trace elements. Deposits are lying e.g. in mine-pits, in the path of flow of surrounding soilwaters, they are interconnected with soil-layers leading soilwater; accordingly, contamination from the deposits can be reckoned with permanence.

According to experiences, deposits consisting of the mixture of slag-flyash-water with a significant content of solid matter will never represent the state of grains with loose constitution, but in dependence on CaO and MgO content compressive strength of 1 to 5,0 kg/cm$^2$ can be measured; an aggregate of this kind has a coefficient of permeability to water being less by several orders of magnitude, so $K = 10^{-5}$ to $10^{-6}$ cm/sec. There is no precipitating lake with a large water surface in the deposit space; accordingly water containing harmful mineral salts does not leak into the subsoil, clouds of dust do not form on the surface of the deposit, as a consequence, deposit can be harmonized with environmental requirement increasingly. Although in this case surface of the deposit space is not covered by a water-surface, but by virtue of adhesion between the grains the deposit will have a hard surface, dust formation stops. Within the depositions grains are not separated, accordingly the state of slag and flyash shows a homogeneous structure from the point of view of permeability, density of the deposit can be characterized by a joint-coefficient of e = 0,45 to 0,85. The aforementioned coefficient relating to permeability to water - i.e. $K = 10^{-5}$ to $10^{-6}$ cm/sec - does not mean an unambigous water-tightness as a part of rainwater and water from thawing of snow will leak through the deposit into the subsoil resp. soilwater and meanwhile it can be polluted by dissolved mineral salts.

Methods for producing homogeneous sludges are also known. As an example let us mention the method as described in the Polish Patent 185 413 in course of which dry flyash and water are charged into a mixer where it is mixed; by the alternating operation of at least two equipments a mixture is produced in a proportion of 1:1 to 3:1 (flyash-water). This process is completed by the method as described in another Polish Patent Specification 185 795, in course of which slag is admixed into the mixture of flyash and water as obtained from the aforementioned mixer; in such a manner the mixture thus obtained is delivered to the deposit area through a pipeline.

A further method is knwon from the Polish Patent Specification 245 199, in course of which a mixture consisting of slag-flyash-water with a high content of solid matter is produced so, that mixing flyash with water is performed continuously, while in the final phase of the method slag formed in the furnace chamber is admixed too. The solution is completed by the Polish Patent Specification 246,465, proposing a mixer based on stream for realizing the aforementioned method.

Hungarian Patent Applications 7293/83, 7928/84 and 15492/87 are considered as developments of the above mentioned Polish Patents in so far as continuously operated equipments are proposed, furtheron, highly concentrated mixture of slag-flyash-water is produced by the previous mixing of slag with water.

The Polish Patent Specification 181 295 relates to the deposition of slag and flyash coming from thermal power stations. This method can be characterized in that the mixture of flyash and wataer, containing solid matter in a high proportion of 1:1-2,5:1 is led to the place of deposition, wherein coefficient of permeability to water is max. $K = 10^{-7}$ cm/sec and compressive strength equals to min. 3,0 kg/cm$^2$.

In case that environmental conditions require a higher strength, known binding materials, so e.g. hydraulic lime, slacked lime and other chemical agents used to be added in a quantity of 6 weight-%, these ingredients increase or replace the effect of binding materials, as CaO and MgO.

Hungarian Patent Application 2343/88 yields the possibility for depositing a mixture consisting of slag

7

and flyash containing a considerable quantity of solid matter; the aim is to utilize flow properties of viscose liquids.

According to the Polish Patent Specifications an indispensable requirement lies in that in course of delivering the flyash-water mixture with a high content of solid matter and with the subsequently admixed slag, delivery in a pipeline requires a flow with the velocity of 1,1 ≈ 1,2 m/s. In lack of said velocity larger slag grains precipitate and will be separated from the flyash-water mixture. In case that there is no possibility to establish the minimal velocity of flow, discontinuous operation gives the right solution. That means that one has to provide for buffer storage, in which flyash and slag are stored in a dry state as long as the quantity is staying at disposal which can be forwarded in a given pipeline with the required velocity.

It can be stated that for both mixing methods according to the Polish Patent Specifications the use of so called industrial water was proposed for producing the mixture of flyash and water, said water comes from the water supply system of the thermal power station. In consideration that temperature of water corresponds mostly to environmental temperature, water is cooling the flyash-aggregate of high temperature to such an extent, that the pipeline - delivering to a longer distance -is to be protected against frost at all means, as the heat contained in slag and flyash cannot be utilized.

It can be stated that none of the Hungarian Patents - relating to methods and equipments - contains elements, by the aid of which unrestricted change of mixture flow within a given pipeline can be realized unambigously, enabling production of a mixture with higher temperature and to reduce permeability to water on the single deposits to such an extent that the deposit could be qualified as watertight.

It can be stated that binding material containing CaO and MgO require carbon dioxide ($CO_2$) contained in air, to assure hydraulic i.e. carbonate binding. However, - as shown by experiences - in deposits of considerable thickness binding cannot be realized in lack of air; accordingly, even if additives are added in accordance with the Polish Patent Specification 221 769, so neither higher strength, nor complete watertightness can be achieved in deposits with thicker layers. Hardness of carbonation origin will be formed but on the surface of the deposit, the importance manifests in the dust-free surface of the deposit.

The invention is based on the recognition, that slag grains falling out from the furnace chamber of the boiler, the bulk wet aggregate having been formed therefrom and the flyash-grains having been separated from the flue gases on different places and the dry flyash-aggrgates formed therefrom show special physical and chemical properties, which enable deposition of slag and flyash so, as to meet requirements of ecology, by using collecting-transporting and depositing means which promote utilization of physical and chemical features of slag and flyash.

We arrived at the recognition that in course of mixing slag and flyash mixtures of high concentration, when the mixture is allowed to stream in a sludge-pump with rotary blades and in pipelines with a properly high velocity, larger slag and flyash grains get comminuted and as a consequence of comminution coefficient of unevenness of grain composition within the mixture can be reduced, accordingly, grains will lie in a lower range of seizes. Comminution can be increased so, that within the mixer either duration of mixing is shortened or intensity of mixing and flow is increased.

As a consequence of comminuting the grains rheologic properties of the mixture will also change, partly because larger grains are comminuted and grain distribution is displaced to the range of finer grains, partly upon the effect of more intensive agitation make-up water will be distributed more evenly on the surface of smaller grains. Due to conversion of the grain range viscosity of the mixture will be less, the mixture will be more effluent. The mixture has certain properties being characteristic for the flow of homogeneous sludges - the so called Binghamian plastic sludges - that means that in a pipeline laminar and turbulent flow can be equally realized and theoritically there is no limit value which could restrict flux of grains.

As a consequence, it is possible to change density and quantity of homogeneous sludges with a plastic behaviour within a pipeline.

In course of our tests we could state that there is a determinable connection between the viscosity and the range of distribution of grains in the mixture; in course of laboratory tests it could be stated, that as a consequence of comminution of grains increased liquified state can be distinguished from viscosity resulting from the water layer covering the grains. In such a manner for every material arising in thermal power stations, based on preliminary laboratory measurements, value of viscosity can well be determined, which is characterizing different grain ranges; in such a manner, by continuously measuring viscosity comminution of grains can be measured for the whole range of grains with a satisfactory approximation.

As already mentioned before, comminution of flyash and slag affect permeability to water of the deposit, joint coefficient and strength of the surface of the aggregate. With aggregates with slag-flyash grains belonging to the finer range of grains, permeability and volume decrease with an order of magnitude, at the same time, using basic material with advantageous properties, mixtures may be prepared, by the aid of which a nearly watertight layer can be obtained. By proper choice of mode of mixing requirements directed to avoidance of soil contamination can be met.

We also recognized that even most strict requirements directed to water-tightness can be met, i.e. in compliance with material layers water-proofness may be achieved, if in course of mixing properly prepared materials with colloidal properties, so e.g. clay grist, bentonite, in a quantity of about 3 to 5 % is added to the mixture of slag and flyash. While mixing the material of colloidal state, so e.g. bentonit contacts make-up water and upon mixing it will be equally distributed between solid grains of slag and flyash, in such a manner gaps between grains are filled, an impermeability can be achieved. As bentonit does not increase strength of grain aggregate, an elastic insulating layer is formed as a result with a shrinkage coefficient being less than that of the clay layer. Water-tightness depends - to a certain extent - on intensity of mixing, in such a manner optimal permeability can be achieved, as increased intensity reduces grains of slag and flyash to the optimal size and gaps inbetween are also filled with bentonite of colloidal state. Using slag-flyash mixed with bentonite, similarly to the watertight insulation made of clay, a layer of optional thickness can be formed on the overland level of a newly opened deposit for protecting subsoil and soilwater flowing therein, simultaneously, an earlier opened deposit can be covered to exclude rainwater. Insulating layers may be formed in course of depositing, at the same time deposition is to be brought in compliance with environmental conditions. We also arrived to the recognition that as a result of reduced joint coefficient solid matter - increased by an order of magnitude - can be deposited.

We also recognized, that temperature of slag and flyash falling out of the boiler space is high, at the same time none of the collecting, transporting and depositing methods have ever reckoned with the utilization of this heat quantity. In course of our tests we could observe that in the flow of the homogeneous mixture of slag-flyash-water shearstress decreases by 20 to 30% simultaneously with a temperataure rise of 10 $^\circ$ C; as a consequence, when homogeneous mixtures of higher temperature are allowed to flow, we may reckon with a smaller pipe-friction loss. In consideration that pipefriction-loss of homogeneous sludges is larger by an order of magnitude than pipe-friction losses of so called heterogeneous mixtures, when homogeneous mixtures of higher temperature are allowed to flow in a pipeline, considerable pumping energy savings can be achieved.

A further advantage of mixtures with higher temperatures lies in that protection of pipelines against freezing up - even with long-distance pipelines (10-20 km) - can be omitted. Accordingly, it seems to be expedient to accumulate heat content of flyash and to use methods of mixing and collection, with which heat loss is minimal.

We also recognized that it seems to be expedient to manage well CaO-MgO quantities being present in slag and flyash. Both materials are soluble in water, dissolution requires a certain time and water of predetermined temperature, accordingly it is proposed to apply hydraulic collection methods when accumulating slag and eventually coarse flyash, which assures required duration and temperature for the dissolution of CaO and MgO and promotes concentration of lime content. In such a manner conditions for hydraulic binding of slag and flyash in the deposit can be established.

Experiences having been gained in thermal power plants referred to the fact that with the majority of thermal power stations make-up water used for the delivery of slag and flyash is mostly hard water due to carbonates contained (CaO and MgO content is too high), as a consequence, scale sedimentation in collecting bins, in which slag and flyash used to be collected, makes operation of the system wearisome.

We have also recognized that in the hydraulic accumulating system softened water with a high pH-value should circulate and it is considered as advantageous, if softening of circulated water is realized by utilizing CaO being present in coarse flyash or slag.

We observed that flow of the softened water yields a more preferable pipefriction coefficient in the pipeline, accordingly delivery and circulation of slag and flyash mixed with softened water results in savings in pumping energy.

Furtheron, we recognized that utilization of chemical and physical properties of slag and flyash becomes possible only by using a complex method, enabling that slag and flyash from thermal power stations heated with pulverized coal could be collected so, as to save water and to forward them to the deposit being in compliance with ecological requirements.

Accordingly, the invention relates to the water-saving and ecologic collection-delivery and deposition system of slag and flyash from thermal power stations heated with pulverized coal utilizing physical and chemical properties, in course of which slag from the furnace chamber of the boiler is allowed to fall into the basin with cooling water, therefrom it is forwarded by means of a scraping conveyor and overflow into a condenser; coarse flyash from one or more collecting bins is led to the same condenser through a duct or channel by water-flow; thereafter fine flyash - having been precipitated electrostatically or by means of filter-bags - is led from below the precipitator to the mixer in a dried state in air flow, either through a silo or directly, wherein slag carried by the water flux and coarse flyash are mixed with fine flyash; major part of

9

the mixture is put into circulation so, that the larger part - starting from the mixing space of the mixer bin and pressed by means of the mixing pump through the mixing pipes - is fed back into a mixer bin, in such a manner flow properties being characteristic for homogeneous slag-flyash-mixtures can be obtained; furtheron, smaller part of the homogeneous mixture is led from the mixing space of the mixer bin to the deposit, namely in a pressurized pipeline belonging to the hydraulic conveyor system; thereafter the homogeneous mixture of slag and flyash is led to the deposit, water having been used up during the abovementioned method is replaced in the cooling basin.

Novel feature of the method according to the invention lies in that for collecting slag and coarse flyash in the condenser, the water quantity needed for the maximal dissolution of CaO-content of coarse flyash - determined by the time needed -is put into circulation in a predetermined space. Slag and coarse flyash coming from said condenser are pumped with a water quantity being less than weight of the flyash in order to admix it to the fines, meanwhile larger grains of slag and flyash are put into turbulence and comminuted by impact of flow.

Comminution is of such an extent that from the afore-mentioned components a mixture is produced, containing grain sizes in the range 0,1-0,3 mm to 80%. Comminution of slag and flyash grains can be increased by changing velocity of the flow in the mixing pipes and/or to increase the quantity of the mixture put into circulation as long as grain composition and grain distribution reach the values which are indispensable for the coefficient of permeability prescribed for the deposit and for rheologic parameters needed for the delivery in pipelines. At the same time quantity of the homogeneous mixture of slag and flyash to be delivered to the deposit by means of the hydraulic conveyor is chosen so, that it should carry with itself slag and flyashes arising in different quantities in the thermal power plant. Grain composition and grain distribution of the homogeneous mixture will be determined on basis of laboratory tests, so continuous measuring of viscosity, correlated measuring of quantity and pressure and by the continuous computer-aided evaluation of the results received.

On the deposit a layer consisting of the homogeneous mixture of slag and flyash for covering the subsoil and the deposit itself, having a permeability determined by requirements directed to ecology, is arranged. In the spaces lying inbetween, layers with different waterproofnesses are formed. In course of forming, the deposit surfaces with inclinations are formed, which promote removal of rainwaters from the deposit surface, both in course of operation and after having filling up the deposit space and performed recultivation.

A further novel characteristic lies in that in course of collection, by accumulating heat content of slag and coarse flyash and by dissolving CaO content therefrom, softed water is obtained with a pH-value of 8 to 11; in such a manner from slag, coarse and fine flyash a homogeneous mixture of the temperature of 60 to 80 °C is prepared, which is led through the pipeline without insulation to the deposit.

It is considered as a new element, that by adding 1 to 5 weight % colloidal material to the mixture comprising slag, fine and coarse flyash, watertightness of the homogeneous mixture can be increased, that means that coefficient of permeability may be reduced.

It is considered as a novelty, that, by using softened water with a pH value of 1-11, by circulating softened water incrustation can be hindered.

Water quantity used up in course of collecting, delivering and depositing is to be replaced from the clean water flowing out from the supplying means of hydraulic conveyor system, by utilizing the pressure of the filling pump of the supplying means.

One of the possible modes of implement of the method according to the invention will be detailed with reference to the drawing enclosed, wherein:

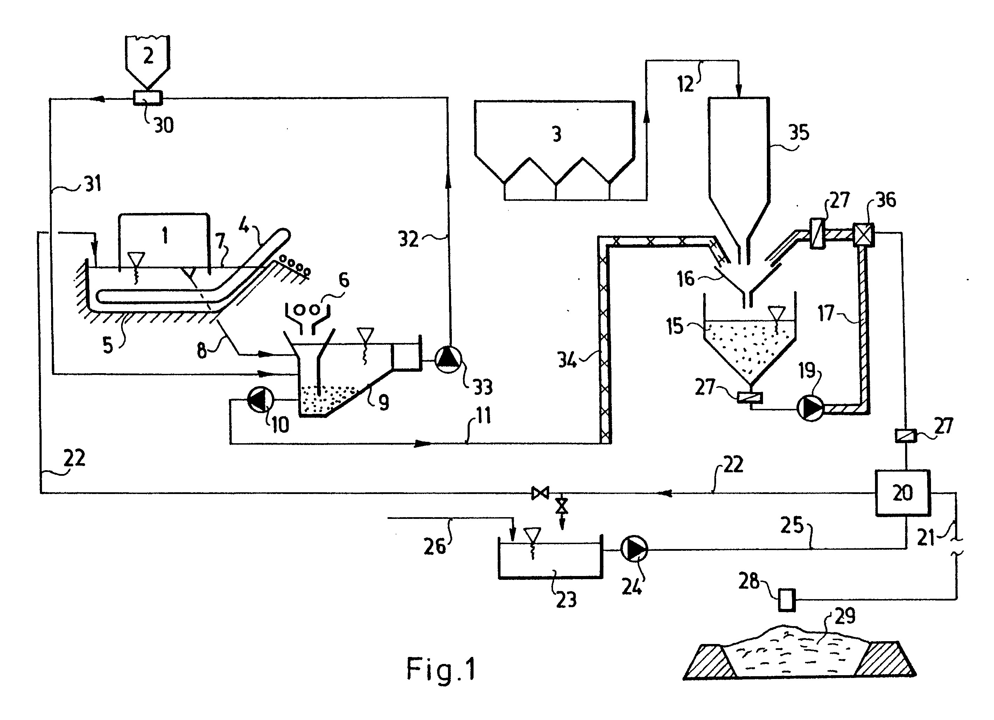

Figure 1 shows the curve of grain distribution of slag and flyash from one of the thermal power plants, the curve of distribution thereof after a shorter and longer mixing time, from these extent of comminution of grains and increased comminution become obvious.

Figure 2 shows a possible mode of realization of the method according to the invention.

Slag grains falling out from the furnace chamber 1 of the boiler of the thermal power plant fired with pulverized coal fall into the basin 5 below the boiler for cooling the slag, cooled grains are scraped out from the water, forwarded on a scraper conveyor 4 and arrive via the breaker 6 into the condenser 9, while slag grains suspended in the cooling basin 5 arrive through the overflow 8, carried away by the water flow into the condenser 9 too. Coarse flyash having been separated mechanically from flue gases is led to the collector bin 2 and it is flushed through the washer 30; at last it arrives through the pipeline 31 - carried by water - to the condenser 9.

Water overflowing from the condenser 9 is forwarded by the circulating pump 33, through the pressure line 32 into the washer 30 and/or to the slag cooling basin 5; accordingly, water quantity being present in the condenser is allowed to circulate continuously.

Flyash having precipitated in the elctrofilter 3 flows through the air-channel 12 - air-borne - in the silo 35. Mixer bin 16 is arranged below the silo 35, fine flyash flows evenly from the silo 35. Condensed slag and coarse flyash are pumped from the condenser 9 by means of the sludge-pump 10 into the mixer bin 16 through the pipelines 11 and 34, in course of passing with a high velocity larger slag grains get comminuted.

Number of revolutions of the sludge-pump 10 is to be chosen so, that slag and coarse flyash should be forwarded from the condenser 9 into the mixer bin 16 by means of a water quantity, being less than the quantity of fine flyash being forwarded from the silo 35 to the mixer bin 16.

In the mixer bin 16 fine flyash coming from the silo 35, slag and coarse flyash arriving through the pipelines 11, 34 and softened and heated water - carrying slag and coarse flyash -are mixed in the mixer bin. Proportion of slag, coarse flyash and fine flyash: to 80% if the grain range 0,1-0,3 mm.

The mixture having been mixed in the mixing space 15 of the mixer bin 16 is pumped by means of the mixing pump 19, thereafter it is recirculated - so about 2/3 - 3/4 of the original quantity - through the mixing-pipes 17 into the mixer bin 16, while in the mixing pipes 17 comminution of larger slag and flyash grains continues; in such a manner a homogeneous mixture of slag and flyash will be obtained.

A smaller part of the sludge pumped by the mixing pump 19 from the mixing space 16 of the mixer bin 16 is allowed to flow to the storage space, flowing through the charging means 20 of the hydraulic conveyor and the pipeline 21 to the deposit 29.

Continuous adjustment of water-tightness of the deposit, as well as rheological parameters of the hydraulic conveyor means is taking place by instruments 27 built in before the mixing pipes 17 and after, measuring quantity, viscosity and pressure, assuring accurate results by computer-aided processing.

Charging means 20 of the hydraulic conveyor are actuated by the pump 24 delivering clean water, through the pipeline 25, while clean water discharged from charging means 20 is leaving through the outflow-pipeline 28, it is led either into the slag cooling basin 5 or the basin 23 for clean water. Water replacement needed for the removal of slag and flyash arrives through the replacing pipeline 26 discharging into the basin 23.

The homogeneous mixture consisting of slag and flyash arriving through the delivery pipeline 21 to the deposit 29 is arranged laminarly. To prepare the layers for the subsoil and for the watertight layers to cover the deposit, we add bentonit from the bentonit-silo 36 into the mixer bin 16, while the intermediate layer are made without admixing bentonit.

## Claims

1. Method for the water-saving ecologic collection, delivery and deposition of slag and flyash from thermal power plants fired with pulverized coal, simultaneously utilizing physical and chemical properties, in course of which slag is allowed to fall into the cooling water basin (5) from the furnace chamber (1) of the boiler, thereafter partly the scraper-conveyor (4) forwards the slag from the basin (5), partly it is led through the overflow (8) to the condenser (9), at the same time coarse flyash is flushed through the pipeline (31) or the channel from the washer (30) into the condenser (9); fine flyash having been precipitated electrostatically or in filter bags is forwarded from below the separator (3) airborne or through the silo (35) or directly to the mixer bin (6), wherein slag and coarse flyash carried by the water-flow and airborne fine flyash are mixed, furtheron, major part of the mixture of slag-flyash-water is put into circulation so, that the major part of the mixture pressed by means of the mixer pump (19) through the mixing pipelines (17) from the mixing space (15) of the mixing bin (16) is recycled to the mixer bin (16) and by the aid of the streams in the mixing pipeline (17) a homogeneous mixture is produced with characteristic flow properties; furtheron, the smaller part of the homogeneous mixture consisting of slag and flyash is directed from the mixing space (15) to the depositing space (29) via the pipeline (21) belonging to the hydraulic conveyor staying under pressure, whereafter the homogeneous mixture is led to the deposit; water quantity having been used up in course of collecting-delivering and depositing processes will be replaced from the cooling water basin (5), characterized in that collection of the slag formed in the furnace chamber of the boiler (1) and the coarse flyash having been separated mechanically in the condenser (9) are allowed to circulate in a system of given volume with a water quantity, which is defined by the duration needed for the maximal dissolution of the CaO content in the slag and the coarse flyash, furtheron, from the condenser (9) slag and/or coarse flyash is pumped through the pipeline (34) with a water quantity being less, than the weight of the fine flyash intended to be admixed, while mixing is carried out so that in the pipe-line (34) with a considerable turbulence larger grains in the slag and the coarse flyash are comminuted by impacted flow and so that in the mixing space (15) from the slag, the coarse flyash and the fine flyash a mixture lying in the low average range of grains, to about 80% with the grain size of 0,1-0,3 mm is produced; comminution of slag and flyash grains in one or more mixing pipeline (17) is enhanced by increasing velocity of the mixture-flow and/or by increasing quantity of the circulated mixture, as long as grain composition and grain distribution of the homogeneous mixture consisting of slag and flyash directed to the storing space from the mixing space (15) reaches the value, which is needed for the coefficient of water permeability prescribed for the deposit and for the rheologic parameters required by the delivery in pipelines, at the same time quantity of the homogeneous mixture of slag and flyash forwarded to the deposit by means of the hydraulic conveyor is to chosen so, that in this way slag and flyash occuring in different quantities in thermal power stations could be transported, furtheron, grain composition and grain distribution of the mixture and rheologic parameters could be determined on basis of data having been gained in course of preliminary laboratory tests, so by continuous measuring viscosity, quantities, pressure and by evaluating in a computer-aided process; as a final cover of the deposit homogeneous slag-flyash layers are arranged, which dispose of the coefficient of water permeability defined by the requirements related to ecology, while in the intermediate layers waterproofness is different; in course of forming the deposit surfaces with inclination are formed, by the aid of which rainwater can be led away from the deposit surface both in course of operation and after having filled it up and performed recultivation.

2. Method as claimed in Claim 1, characterized in that in course of collecting slag and coarse flyash by accumulating heat content of slag and flyash and by dissolving CaO content of coarse flyash softed water with·pH value of 8 to 11 is prepared and from softwater, slag, coarse flyash and fine flyash homogeneous mixture of the temperature of 60 to 80 $^\circ$C is prepared, and for the sake of depositing said mixture is led to the depositing area through pipelines led freely and without any isulation.

3. Method as claimed in Claim 1, characterized in that slag and coarse flyash are collected by putting softened water with a pH-value of 8 to 11 into circulation.

4. Method as claimed in Claim 1, characterized in that in course of preparing the homogeneous mixture consisting of slag and flyash a material with collodial properties is added, or on the deposit, onto the layer comprising slag and flyasha solution made of some colloidal substance used to be sprayed, quantity of spray will be determined by the requirement directed to watertightness of the homogeneous layer.

5. Method as claimed in Claim 1, characterized in that water quantity required for the process of collecting, delivering and depositing will be supplied from clean water discharged from the charging means (20) by using the pressure of the sludge pump of the charging means (20).

Fig.1

EP 0 394 756 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4804147 (HOOPER)<br>* column 2, lines 28 - 38 *<br>* column 3, line 40 - column 4, line 36 *<br>* column 5, line 7 - column 6, line 42; figure * | 1 | B09B3/00 |
| A | DE-B-1253854 (THE ALLEN-SHERMAN-HOFF COMPANY)<br>* column 1, lines 1 - 24 *<br>* column 4, line 29 - column 5, line 36; figures * | 1 | |
| A | DD-A-240335 (VEB INDUSTRIE- UND KRAFTWERKS-ROHRLEITUNGEN BITTERFELD)<br>* page 1, lines 11 - 18 *<br>* page 2, lines 10 - 39; figures * | 1 | |
| A | SCIENTIFIC AMERICAN.<br>vol. 259, no. 6, December 88, NEW YORK US<br>pages 18 - 24; O'Leary et al:<br>"Managing Solid Waste"<br>* page 21, column 1, line 61 - page 22, column 1, line 17; figure 4 * | 1 | TECHNICAL FIELDS SEARCHED (Int. Cl.5 ) |
| A | DE-A-3641786 (FRITSCH)<br>* page 2, line 34 - page 3, line 48 * | 1, 4 | B09B<br>B03B<br>F23J |

The present search report has been drawn up for all claims

| Place of search | Date of completion of the search | Examiner |
|---|---|---|
| THE HAGUE | 24 JULY 1990 | VAN DER ZEE W.T. |